# EUROPÄISCHE PATENTANMELDUNG

(11) **EP 3 623 552 A1**
(43) Veröffentlichungstag der Anmeldung: **18.03.2020**
(21) Anmeldenummer: 18194872.0
(22) Anmeldetag: 17.09.2018
(51) Int. Cl.: E05C 17/60, E05B 65/08, B60J 1/16, E05F 11/53, E05C 9/18, E05B 83/04

(54) **VERRIEGELUNGSVORRICHTUNG FÜR EIN SCHIEBEFENSTER EINES KRAFTFAHRZEUGS SOWIE SCHIEBEFENSTERBAUGRUPPE MIT EINER DERARTIGEN VERRIEGELUNGSVORRICHTUNG**

(71) Anmelder: DURA Automotive Holdings U.K., Ltd., Birmingham, West Midlands B35 7AG (GB)
(72) Erfinder: JÄGER, Timo, 51597 Morsbach (DE)
(74) Vertreter: btb IP Bungartz Baltzer Partnerschaft mbB Patentanwälte

(57) **Zusammenfassung**

Um bei einer Verriegelungsvorrichtung für ein Schiebefenster eines Kraftfahrzeugs sowie bei einer Schiebefensterbaugruppe mit einer solchen Verriegelungsvorrichtung einen zuverlässigen Wechsel zwischen einer Verriegelungsstellung und einer Entriegelungsstellung ermöglichen und zu gewährleisten, dass das Schiebefenster gegenüber der feststehenden Struktur, relativ zu der es beweglich ist, möglichst unmittelbar allein durch das Überführen des Betätigungselements in die Verriegelungsstellung in der aktuellen Position festgelegt wird, ohne dass das Schiebefenster zusätzlich manuell in eine Position verschoben werden muss, in der eine Verriegelung in Eingriff gerät, ist in einer stationär festgelegten Führung ein in Verschieberichtung längsbeweglich sowie begrenzt drehbeweglich und/oder quer zur Verschieberichtung begrenzt querbeweglich aufgenommener Gleitkolben vorgesehen, der in einer Verriegelungsstellung in einen Eingriffsabschnitt der Führung eingreift und der in der Entriegelungsstellung außer Eingriff mit dem Eingriffsabschnitt gerät.

## Beschreibung

Die Erfindung betrifft eine Verriegelungsvorrichtung für ein Schiebefenster eines Kraftfahrzeugs sowie eine Schiebefensterbaugruppe mit einer feststehenden Scheibe, einem hierzu beweglichen Schiebefenster und einer derartigen Verriegelungsvorrichtung.

Aus der DE 10 2005 042 090 A1 geht ein Schiebefenster für ein Kraftfahrzeug hervor. Das Schiebefenster weist einen Verriegelungsgriff mit einem Drehkreuz auf, das um eine Achse drehbar gelagert ist und an dem eine oder mehrere Verriegelungsstangen befestigt sind. Der Verriegelungsgriff weist einen längsverschieblich geführten Betätigungsschieber mit einem Betätigungsteil und ein an dem Drehkreuz vorgesehenes Eingriffsteil auf.

Ferner geht aus der EP 1 916 132 B1 eine Vorrichtung zum Verschließen einer Öffnung eines Kraftfahrzeugs hervor. Die Vorrichtung weist mindestens eine Platte auf, die in Bezug auf eine stationäre Struktur entlang einer Schiebeachse beweglich und mit einer Verriegelungsvorrichtung ausgerüstet ist. Die Verriegelungsvorrichtung weist zwei Riegel auf, die jeweils mit mindestens einem ergänzenden Verriegelungselement, das dazu auf der stationären Struktur vorgesehen ist, zusammenwirkt. Jeder der Riegel ist jeweils mit einem Hebel verbunden, der in Drehung beweglich montiert ist, wobei sich die Riegel im Wesentlichen entlang einer gemeinsamen Achse verlagern können. Ferner weist die Verriegelungsvorrichtung einen Betätigungsgriff auf, der durch Schieben entlang einer Richtung im Wesentlichen parallel zu der Schiebeachse der Schiebeplatte beweglich ist und auf die Hebel derart einwirkt, dass sie mindestens zwei Positionen einnehmen können. Die erste Position ist eine Ruhestellung, in der die Riegel in einem mit einem der ergänzenden Verriegelungselemente verriegelten Zustand sind. Die zweite Position ist eine Entriegelungsstellung, in der jeder der Hebel jeweils auf Verbindungsmittel mit einem der Riegel derart wirkt, dass diese Letzteren in einen entriegelten Zustand gestellt werden.

Aufgabe der Erfindung ist es, eine alternative Verriegelungsvorrichtung für ein Schiebefenster eines Kraftfahrzeugs zu schaffen. Insbesondere soll die Verriegelungsvorrichtung einfach zu bedienen und kompakt gebaut sein sowie einen zuverlässigen Wechsel zwischen einer Verriegelungsstellung und einer Entriegelungsstellung ermöglichen. Die Verriegelungsvorrichtung soll gewährleisten, dass das Schiebefenster gegenüber der feststehenden Struktur, relativ zu der es beweglich ist, insbesondere gegenüber einer feststehenden Fensterscheibe, möglichst unmittelbar allein durch das Überführen des Betätigungselements in die Verriegelungsstellung in der aktuellen Position, in der es sich gerade befindet, festgelegt wird, ohne dass das Schiebefenster zusätzlich manuell in eine Position verschoben werden muss, in der eine Verriegelung in Eingriff gerät. Weiter ist es ein Ziel der Erfindung, eine weitgehend selbsttätige, zumindest aber effektiv unterstützte Rückführung des Schiebefensters quer zur Verschieberichtung in eine geschlossene Position zu gewährleisten.

Diese Aufgaben werden durch eine Verriegelungsvorrichtung nach Anspruch 1 sowie eine Schiebefensterbaugruppe nach Anspruch 15 gelöst. Vorteilhafte Weiterbildungen der Verriegelungsvorrichtung sind den Ansprüchen 2 bis 14 zu entnehmen.

Eine erfindungsgemäße Verriegelungsvorrichtung für ein Schiebefenster eines Kraftfahrzeugs umfasst mindestens ein Betätigungselement, das aus einer Verriegelungsstellung in eine Entriegelungsstellung überführbar ist, wobei das Betätigungselement mit einem in Verschieberichtung des Schiebefensters in einer stationär festgelegten Führung in Verschieberichtung längsbeweglich sowie begrenzt drehbeweglich und/oder quer zur Verschieberichtung begrenzt querbeweglich aufgenommenen Gleitkolben zusammenwirkt, wobei die Führung einen Eingriffsabschnitt und der Gleitkolben mindestens ein Eingriffselement aufweist, das dazu vorgesehen ist, in der Verriegelungsstellung des Betätigungselements in den Eingriffsabschnitt einzugreifen, um die Längsbeweglichkeit des Gleitkolbens zu sperren, und in der Entriegelungsstellung außer Eingriff mit dem Eingriffsabschnitt gerät, um ein Verschieben des Schiebefensters in Verschieberichtung zu ermöglichen.

Das Betätigungselement kann insbesondere um eine Drehachse zwischen einer Verriegelungsstellung und einer Entriegelungsstellung drehbar gelagert sein. Dabei kann dem mindestens einen Betätigungselement mindestens eine Verriegelungsstange zugeordnet sein, die dazu vorgesehen ist, bei einer Rotation des mindestens einen Betätigungselements eine translatorische Bewegung durchzuführen. Die mindestens eine Verriegelungsstange ist zweckmäßig mit dem zumindest teilweise drehbeweglich bzw. querbeweglich sowie in Verschieberichtung des Schiebefensters längsbeweglich in der stationär festgelegten Führung aufgenommenen Gleitkolben verbunden. Die Führung kann als Führungshohlschiene, insbesondere als Führungszylinder, ausgebildet sein, die einen nach innen weisenden Eingriffsabschnitt an einer innenseitigen Fläche aufweist. Der Eingriffsabschnitt ist bevorzugt als Verzahnungsabschnitt ausgebildet, umfasst weiter bevorzugt eine Vielzahl an Zähnen und erstreckt sich in vorteilhafter Weise über die gesamte Länge des Verschiebewegs des Gleitkolbens. Bevorzugt ist vorgesehen, dass die mindestens eine Verriegelungsstange exzentrisch am Betätigungselement angelenkt ist. Die Anlenkung ist bevorzugt derart ausgebildet, dass eine Drehbewegung des Betätigungselements in einer translatorischen Bewegung der mindestens einen Verriegelungsstange resultiert. Der Gleitkolben kann als im Wesentlichen zylindrischer oder blockartiger Kolben ausgebildet sein, dessen Querschnitt an die inneren Führungsflächen der Führung gleitfähig angepasst sind. Bevorzugt fungiert der Gleitkolben auch als Führungskolben, über den des Schiebefenster in der Führung geführt ist.

Mit anderen Worten wird die Längsbeweglichkeit des Schiebefensters in Verschieberichtung bevorzugt durch Verdrehen des mindestens einen Betätigungselements um die Drehachse hergestellt. In einer Ausgangstellung befindet sich das Betätigungselement in einer Verriegelungsstellung, wobei das Schiebefenster geschlossen ist. Um das Schiebefenster zu öffnen wird zunächst das Betätigungselement bis in die Entriegelungsstellung überführt, um danach das Schiebefenster in Verschieberichtung translatorisch verschieben zu können. Nach Erreichen der gewünschten Öffnungsposition des Schiebefensters wird das Betätigungselement manuell oder selbsttätig wieder in die Verriegelungsstellung gedreht, wobei das Schiebefenster unmittelbar in der eingenommenen Öffnungsposition fixiert wird, indem das Eingriffselement des Führungsglieds mit dem Eingriffsabschnitt der Führung in Eingriff gerät. Mithin lässt sich das Schiebefenster auf einfache Weise Öffnen und Schließen, wobei das Schiebefenster spontan in einer beliebigen Position verriegelt bzw. translatorisch blockiert wird, ohne dass der Nutzer das Schiebefenster manuell in eine Position verschieben muss, in der die Verriegelung bzw. Blockade hergestellt ist.

Die mindestens eine Verriegelungsstange ist als Koppelstange zwischen dem Gleitkolben und dem Betätigungselement vorgesehen. Dadurch, dass die mindestens eine Verriegelungsstange exzentrisch am Gleitkolben gelagert ist, wird aus einer translatorischen Bewegung der Verriegelungsstange eine Rotation des Gleitkolbens generiert, wobei die Rotation des Gleitkolbens das mindestens eine Eingriffselement und den Verzahnungsabschnitt in Eingriff oder außer Eingriff bringt. Der bevorzugt mit einer Eingriffsverzahnung versehene Eingriffsabschnitt weist dabei eine Vielzahl von Vorsprüngen bzw. Ausnehmungen auf, die korrespondierend zu dem mindestens einen Eingriffselement ausgebildet sind und ein in Bezug auf die aktuelle Position des Schiebefensters positionsunabhängiges In-Eingriff-Bringen des Eingriffselements erlauben.

Demnach befindet sich das mindestens eine Eingriffselement in einer Verriegelungsstellung des Betätigungselements im Eingriff mit dem Eingriffsabschnitt, wodurch eine axiale Bewegung des Kolbens in der Führung gesperrt ist und somit auch eine axiale Bewegung des Schiebefensters in Verschieberichtung gesperrt ist. Demgegenüber befindet sich in einer Entriegelungsstellung des mindestens einen Betätigungselements das Eingriffselement außerhalb des Verzahnungsabschnitts, wodurch eine axiale Bewegung des Kolbens in der Führung freigegeben ist und somit auch das Schiebefenster in Verschieberichtung axial bewegbar ist.

Die Erfindung schließt die technische Lehre ein, dass eine Rückstellfeder, insbesondere eine Torsionsfeder, dazu vorgesehen ist, das mindestens eine Betätigungselement selbsttätig in die Verriegelungsstellung zurückzuführen. Insbesondere kann die Rückstellfeder zumindest mittelbar mit dem Betätigungselement verbunden sein, vorzugsweise ist sie in das Betätigungselement integriert. Beispielsweis ist ein erstes distales Ende der Rückstellfeder an dem Betätigungselement angeordnet und ein zweites distales Ende der Rückstellfeder an einem relativ dazu nicht verdrehbaren Bauteil. Mithin erfolgt eine Verdrehung des Betätigungselements aus der Verriegelungsstellung in die Entriegelungsstellung gegen die Federkraft der Rückstellfeder, wobei die Rückstellung des Betätigungselements aus der Entriegelungsstellung in die Verriegelungsstellung automatisch ohne eine zusätzliche Krafteinwirkung durch den Benutzer erfolgt. Dadurch rastet das Schiebefenster stets in der eingestellten Öffnungsposition ein und es bedarf keiner zusätzlichen Maßnahme zur Verrastung durch den Benutzer. Dies erhöht insbesondere die Sicherheit der Fahrzeuginsassen bei einem Unfall oder einer Bremsung des Kraftfahrzeugs und vermeidet versehentliche Fehlbedienungen.

Vorzugsweise weist die mindestens eine Verriegelungsstange einen Führungspin auf, der in einer Führungsbahn an dem Betätigungselement geführt ist, wobei die Führungsbahn eine erste Anschlagposition und eine zweite Anschlagposition für den Führungspin aufweist. Insbesondere erstreckt sich der Führungspin im Wesentlichen senkrecht zur mindestens einen Verriegelungsstange und koppelt die mindestens eine Verriegelungsstange mit der Führungsbahn an dem mindestens einen Betätigungselement. Sofern der Führungspin an der ersten Anschlagposition tangential in Anlage kommt befindet sich das Betätigungselement in der Verriegelungsstellung. Demgegenüber befindet sich das Betätigungselement in der Entriegelungsstellung wenn der Führungspin an der zweiten Anschlagposition tangential in Anlage kommt.

Bevorzugt ist die Führungsbahn bogenförmig ausgebildet, wobei die erste Anschlagposition in radialer Richtung weiter von der Drehachse des Betätigungselements entfernt ist als die zweite Anschlagposition. Mit anderen Worten wird durch die geometrische Ausbildung der Führungsbahn bei einer Drehung des Betätigungselements die Verriegelungsstange derart simultan translatorisch bewegt, dass der Führungspin in der Führungsbahn - je nach Drehrichtung - radial auf die Drehachse zu oder von dieser weg bewegt wird.

Insbesondere kann der Verriegelungsmechanismus außerdem derart ausgebildet sein, dass das Verdrehen des Betätigungselements das Schiebefenster senkrecht zur Verschieberichtung des Schiebefensters bewegt, insbesondere in das Fahrzeuginnere hinein. Dazu ist die mindestens eine Verriegelungsstange derart exzentrisch am Gleitkolben gelagert, das eine Rotation des Gleitkolbens mit einer axialen Bewegung der mindestens einen Verriegelungsstange senkrecht zur Längsachse der Verriegelungsstange sowie senkrecht zur Verschieberichtung des Schiebefensters einhergeht. Oder der Gleitkolben kann derart in der Führung aufgenommen sein, dass eine Verlagerung des Gleitkolbens innerhalb der Führung senkrecht zur Verschieberichtung das Schiebefenster senkrecht zur Verschieberichtung drängt. Hierzu können die äußeren Gleitkolbenflächen und/oder die inneren Gleitflächen der Führung entsprechend aufeinander abgestimmt und zueinander ausgerichtet sein, insbesondere durch eine Schrägstellung der entsprechenden Flächen. Insbesondere wird das Schiebefenster bei einem Wechsel des Betätigungselements aus der Verriegelungsstellung in die Entriegelungsstellung selbsttätig in den Innenraum des Kraftfahrzeugs verlagert und bei einem Schließen des Schiebefensters wird das Schiebefenster zurück in die geschlossene Position gedrängt, in der das Schiebefenster insbesondere außenseitig bündig in eine feststehende Scheibe aufgenommen sein kann, so dass das Schiebefenster und die stationäre Struktur einen flächenbündigen Übergang an der Außenhaut des Fahrzeugs darstellen ("Flush Design"). Die Rückstellfeder kann ferner dafür sorgen, dass der Schließvorgang selbsttätig erfolgt und das bewegliche Schiebefenster selbsttätig quer zur Verschieberichtung in die Schließstellung gedrängt wird.

Vorzugsweise ist die Führung dazu vorgesehen, an einer stationären Struktur des Kraftfahrzeugs fixiert zu sein, insbesondere innenseitig an einer feststehenden Fensterscheibe einer Schiebefensterbaugruppe. Bevorzugt ist das Betätigungselement an dem Schiebefenster fixiert. Unter einer stationären Struktur des Kraftfahrzeugs ist ein Bauteil zu verstehen, das fest mit dem Kraftfahrzeug verbunden ist und relativ zum Schiebefenster unbeweglich ist. Mithin ist das Betätigungselement zusammen mit der mindestens einen Verriegelungsstange und dem jeweiligen Kolben zumindest mittelbar fest mit dem Schiebefenster verbunden und somit zusammen mit dem Schiebefenster in Verschieberichtung des Schiebefensters axial beweglich. Beispielsweise ist die Führung stoff-, kraft- und/oder formschlüssig mit der stationären Struktur des Kraftfahrzeugs verbunden, wobei das Betätigungselement, die Verriegelungsstangen, die Gleitkolben sowie insbesondere die diese Elemente aufnehmende Struktur stoff-, kraft- und/oder formschlüssig mit dem beweglichen Schiebefenster verbunden ist.

Gemäß einer bevorzugten Ausführungsform der Erfindung sind an dem Betätigungselement eine erste Verriegelungsstange und eine zweite Verriegelungsstange angeordnet, wobei die erste Verriegelungsstange mit einem ersten Gleitkolben, der in einer ersten Führung angeordnet ist, verbunden ist, und wobei die zweite Verriegelungsstange mit einem zweiten Gleitkolben, der in einer zweiten Führung angeordnet ist, verbunden ist. Mithin betätigt eine Betätigung des Betätigungselements beide Verriegelungsstangen simultan in gleicher Weise. Insbesondere sind die beiden Verriegelungsstangen gegenüberliegend voneinander an dem Betätigungselement angeordnet und identisch zueinander ausgebildet. Die beiden Führungen sind parallel zueinander angeordnet, wobei sich das Betätigungselement räumlich zwischen den beiden Führungszylinder befindet.

Ferner betrifft die Erfindung eine Schiebefensterbaugruppe, umfassend eine feststehenden Scheibe und ein bewegliches Schiebefenster, wobei das Schiebefenster in Bezug auf die feststehende Scheibe in einer Verschieberichtung translatorisch beweglich ist und eine Verriegelungsvorrichtung der vorstehend beschriebenen Art aufweist.

Weitere Merkmale und Vorteile der Erfindung ergeben sich aus der nachfolgenden Beschreibung eines bevorzugten Ausführungsbeispiels anhand der schematischen Zeichnungen. In den Zeichnungen zeigen:
- Fig. 1a: eine Perspektivdarstellung einer Schiebefensterbaugruppe mit einem geschlossenen Schiebefenster und einer Verriegelungsvorrichtung in einer Verriegelungsstellung,
- Fig. 1b: eine Perspektivdarstellung der Schiebefensterbaugruppe gemäß Fig. 1a mit einem geöffneten Schiebefenster und der Verriegelungsvorrichtung in der Entriegelungsstellung,
- Fig. 2a: eine teilweise geschnittene Perspektivdarstellung eines Betätigungselements der Verriegelungsvorrichtung gemäß Fig. 1a,
- Fig. 2b: eine teilweise geschnittene Perspektivdarstellung des Betätigungselements der Verriegelungsvorrichtung gemäß Fig. 1b,
- Fig. 3a: eine teilweise geschnittene Perspektivdarstellung einer Führung mit einem Gleitkolben in einer Verriegelungsstellung der Verriegelungsvorrichtung,
- Fig. 3b: eine Schnittdarstellung der Verriegelungsvorrichtung gemäß der Figuren 1a, 2a und 3a,
- Fig. 4a: eine teilweise geschnittene Perspektivdarstellung einer Führung mit Gleitkolben in einer Entriegelungsstellung der Verriegelungsvorrichtung,
- Fig. 4b: eine Schnittdarstellung der Verriegelungsvorrichtung gemäß der Figuren 1b, 2b und 4a,
- Fig. 5a: eine perspektivische Ansicht des in Verriegelungsstellung befindlichen Betätigungselements mit einer zeichnerisch freigeschnittenen Betätigungssicherung in Sperrstellung,
- Fig. 5b: das in Figur 5a gezeigte, in Verriegelungsstellung befindliche Betätigungselement im Schnitt,
- Fig. 6a: eine perspektivische Ansicht des Betätigungselements aus Figuren 5a und 5b in einer Zwischenstellung während des Übergangs aus der Verriegelungsstellung in die Entriegelungsstellung und nach Überführen des Betätigungsgriffs in eine Betätigungsstellung, und
- Fig. 6b: das Betätigungselement in der Stellung aus Figur 6a in einer Schnittdarstellung.

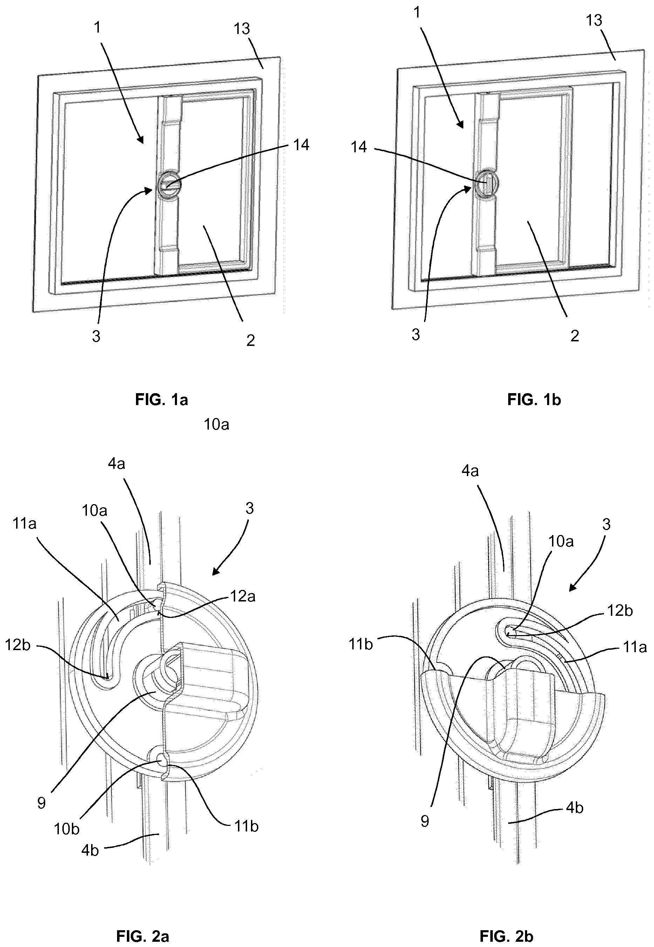

Die Figuren 1a und 1b zeigen eine Schiebefensterbaugruppe als Vorrichtung zum Verschließen einer Karosserieöffnung eines - hier nicht dargestellten - Kraftfahrzeugs. Die Vorrichtung umfasst eine stationäre Struktur 13 in Form einer feststehenden Scheibe und ein Schiebefenster 2, wobei das Schiebefenster 2 in Bezug zur stationären Struktur 13 in einer Verschieberichtung axial beweglich ist und eine Verriegelungsvorrichtung 1 aufweist. Ein Betätigungselement 3 mit einem Betätigungsgriff 14 ist im Wesentlichen mittig an einer Kante des Schiebefensters 2 angeordnet.

Gemäß Figur 1a ist das Schiebefenster 2 geschlossen und die Verriegelungsvorrichtung 1 beziehungsweise das Betätigungselement 3 befindet sich in einer Verriegelungsstellung. Der Betätigungsgriff 14 ist horizontal angeordnet. Nach Figur 1b ist das Schiebefenster 2 geöffnet und die Verriegelungsvorrichtung 1 beziehungsweise das Betätigungselement 3 befindet sich in einer Entriegelungsstellung. Der Betätigungsgriff 14 ist vertikal angeordnet und somit um 90° gedreht im Vergleich zum Betätigungsgriff 14 gemäß Figur 1a.

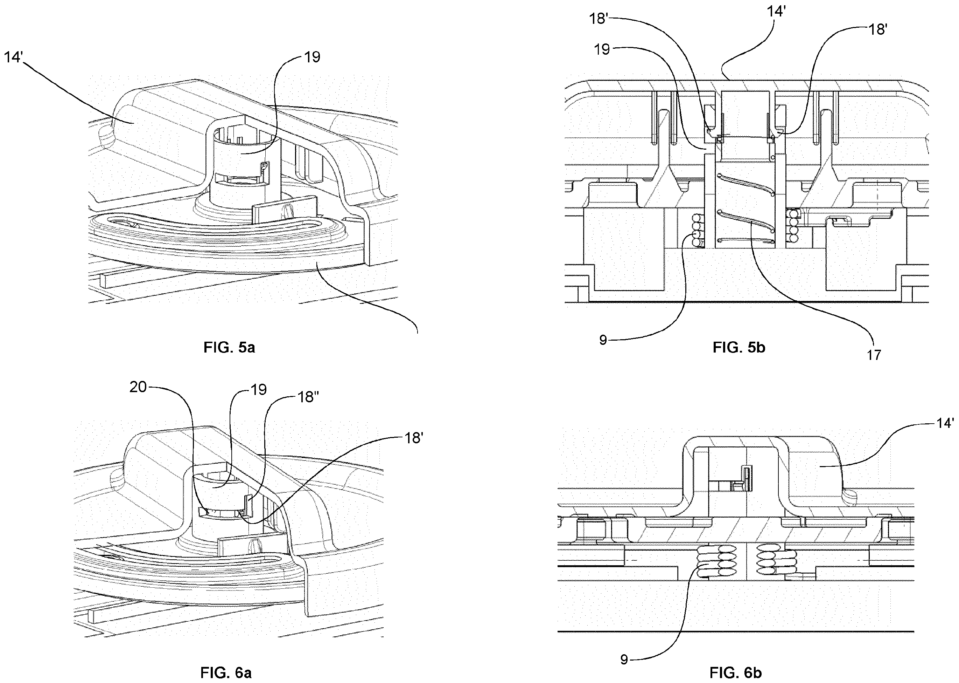

Die Figuren 2a und 2b zeigen das Betätigungselement 3 in einer teilweise geschnittenen Perspektivdarstellung. Das Betätigungselement 3 ist um eine Drehachse zwischen der Verriegelungsstellung gemäß Figur 2a und der Entriegelungsstellung gemäß Figur 2b drehbar gelagert. Eine Torsionsfeder 9 (siehe Figuren 5b und 6b) ist am Betätigungselement 3 angeordnet, um das Betätigungselement 3 stets in die Verriegelungsstellung zurückzudrängen bzw. in dieser Stellung zu halten. Ferner ist eine jeweilige Führungsbahn 11a, 11b am Betätigungselement 3 ausgebildet, in der ein jeweiliger Führungspin 10a, 10b einer jeweiligen Verriegelungsstange 4a, 4b geführt ist. Die jeweilige Führungsbahn 11a, 11b ist bogenförmig ausgebildet und weist jeweils eine erste Anschlagposition 12a sowie eine zweite Anschlagposition 12b für den jeweiligen darin geführten Führungspin 10a, 10b auf. Die erste Anschlagposition 12a ist in radialer Richtung weiter von der Drehachse des Betätigungselements 3 entfernt als die zweite Anschlagposition 12b. Dadurch führen die beiden am Betätigungselement 3 aufgenommenen Verriegelungsstangen 4a, 4b bei einer Rotation des Betätigungselements 3 aus einer Verriegelungsstellung in eine Entriegelungsstellung eine translatorische Bewegung in horizontaler Richtung aus.

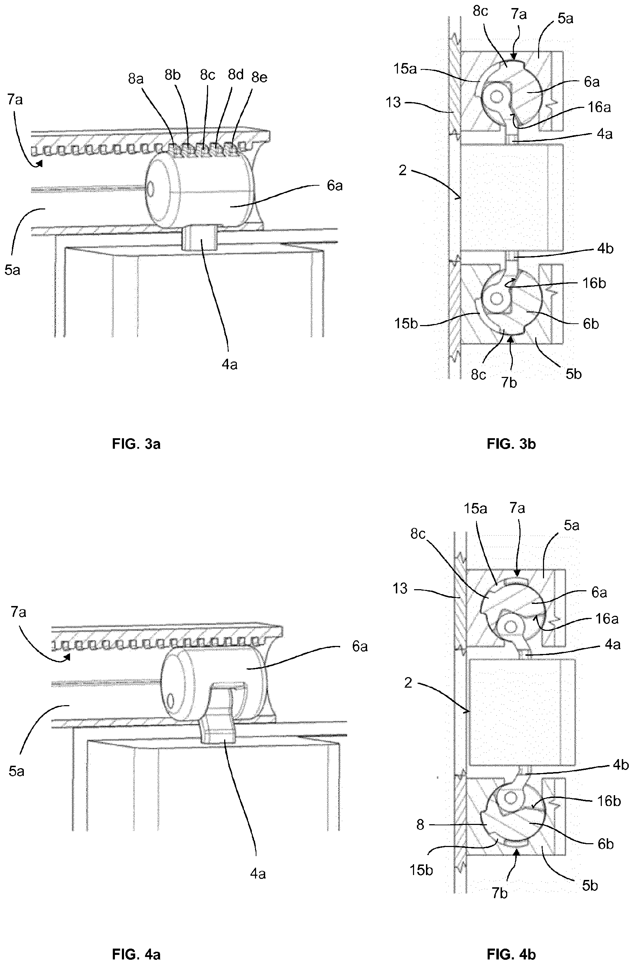

Gemäß den Figuren 3a, 3b, 4a und 4b sind die Verriegelungsstangen 4a, 4b mit einem jeweiligen zumindest teilweise drehbeweglichen Gleitkolben 6a, 6b verbunden. Der jeweilige Gleitkolben 6a, 6b ist in Verschieberichtung des Schiebefensters 2 axialbeweglich in einer jeweiligen stationär festgelegten Führung in Form eines länglichen Führungszylinders 5a, 5b aufgenommenen. Der jeweilige Führungszylinder 5a, 5b weist einen als Verzahnungsabschnitt 7a, 7b ausgebildeten Eingriffsabschnitt auf, wobei der jeweilige Gleitkolben 6a, 6b vorliegend beispielhaft fünf Eingriffselemente 8a, 8b, 8c, 8d, 8e aufweist. Der Verzahnungsabschnitt erstreckt sich über den gesamten Verschiebeweg des Gleitkolbens, so dass die bewegliche Scheibe in jeder beliebigen Position festgelegt werden kann.

In der Verriegelungsstellung des Betätigungselements 3 gemäß den Figuren 3a und 3b greifen die jeweiligen Eingriffselemente 8a, 8b, 8c, 8d, 8e formschlüssig in den jeweiligen Verzahnungsabschnitt 7a, 7b ein, um eine axiale Bewegung des Kolbens 6a, 6b im jeweiligen Führungszylinder 5a, 5b zu sperren. In der Entriegelungsstellung des Betätigungselements 3 gemäß den Figuren 4a und 4b sind die Eingriffselemente 8a, 8b, 8c, 8d, 8e außerhalb des jeweiligen Verzahnungsabschnitts 7a, 7b angeordnet, um eine axiale Bewegung des Gleitkolbens 6a, 6b im jeweiligen Führungszylinder 5a, 5b freizugeben. Dazu ist im jeweiligen Führungszylinder 5a, 5b neben dem Verzahnungsabschnitt eine nutartige Aussparung 15a, 15b ausgebildet, die dazu vorgesehen ist die Eingriffselemente 8a, 8b, 8c, 8d, 8e aufzunehmen und eine translatorische Bewegung der Gleitkolben samt der Eingriffselemente 8a, 8b, 8c, 8d, 8e innerhalb der Führung in Verschieberichtung des Schiebefensters 2 zu ermöglichen.

Ferner geht aus Figur 4a und Figur 4b hervor, dass das Verdrehen des Betätigungselements 3 das Schiebefenster 2 senkrecht zur Verschieberichtung des Schiebefensters 2 bewegt. Mithin wird das Schiebefenster 2 durch Überführen des Betätigungselements in die Entriegelungsstellung senkrecht zur Verschieberichtung des Schiebefensters 2 in den Innenraum des Kraftfahrzeugs bewegt und dadurch axial von der stationären Struktur 13 beabstandet, so dass es parallel zur feststehenden Struktur (der feststehenden Scheibe der Schiebefensterbaugruppe), in die das Schiebefenster in geschlossener Position bevorzugt außenseitig bündig eingelassen ist, verschoben werden kann. Ferner bewirkt die mit dem Betätigungselement zusammenwirkende Rückstellfeder bei Erreichen der Schließposition (Fig. 1a), dass die Schiebefensterscheibe selbsttätig gegen die feststehende Struktur angestellt wird bzw. wieder in die Position hineingedrängt wird, in der die bewegliche Schiebefensterscheibe in die feststehende Scheibe eingelassen ist und - zur Erzeugung eines ebenen Übergangs zwischen den außenseitigen Rändern der beweglichen Schiebefensterscheibe und den diesen zugewandten Rändern der feststehenden Scheibe an der zum Fahrzeugäußeren weisenden Fläche der Schiebefensterbaugruppe - außenseitig bündig mit dieser abschließt.

Die beiden Führungszylinder 5a, 5b sind an der stationären Struktur 13 des Kraftfahrzeugs fixiert. Es wird darauf hingewiesen, dass die Figuren 3b und 4b stark vereinfacht und nicht maßstabsgetreu dargestellt sind, wobei außerdem auf die Darstellung des Betätigungselements 3 verzichtet wurde und nur die horizontalen Endbereiche der Verriegelungsvorrichtung 1, insbesondere die beiden Führungszylinder 5a, 5b mit den darin aufgenommenen Gleitkolben 6a, 6b sowie der daran gelagerten Verriegelungsstangen 4a, 4b dargestellt sind.

Die jeweilige Verriegelungsstange 4a, 4b ist an einem distalen Endbereich, der zumindest teilweise im jeweiligen Gleitkolben 6a, 6b angeordnet ist, zumindest teilweise gebogen, wobei der jeweilige Kolben 6a, 6b eine jeweilige Anschlagfläche 16a, 16b aufweist, die zumindest teilweise korrespondierend zum zumindest teilweise gebogenen Endbereich der jeweiligen Verriegelungsstange 4a, 4b ausgebildet ist. Insbesondere kommt der jeweilige gebogene Endbereich der jeweiligen Verriegelungsstange 4a, 4b in der Verriegelungsstellung an der jeweiligen Anschlagfläche 16a, 16b in Umfangsrichtung zur Anlage.

Eine besonders vorteilhafte Ausgestaltung des Betätigungselements 3, die Figuren 5a bis 6b entnommen werden kann, kann vorsehen, dass das Betätigungselement 3 eine Betätigungssicherung aufweist, gemäß der der Betätigungsgriff 14 vor einer möglichen wirksamen Betätigung zunächst aus einer Sperrstellung in eine Betätigungsstellung überführt werden muss, in der eine wirksame Betätigung des vorstehend beschriebenen Ver- oder Entriegelungsvorgangs überhaupt erst vorgenommen werden kann. Eine solche Betätigungssicherung kann als Diebstahlschutz fungieren, in dem sie verhindert, dass das Betätigungselement durch eine lediglich einfach gerichtete Bewegung, etwa einfaches Drehen, wirksam betätigbar ist, sondern für die Betätigung eine Kombination von zumindest zwei Bewegungen erfordert.

Insbesondere kann vorgesehen sein, dass der Betätigungsgriff 14 in einer Richtung weitgehend senkrecht zu der von dem Schiebefenster 2 aufgespannten Fläche bzw. senkrecht zur Verschieberichtung des Schiebefensters zunächst aus einer Sperrstellung (Figuren 5a und 5b) gegen eine Rückhaltefeder 17 in eine Betätigungsstellung (Figuren 6a und 6b) zu überführen ist.

In der Sperrstellung ist eine Betätigung des Betätigungselements 3 mittels des Betätigungsgriffs 14 unterbunden und eine wirksame Entriegelung der beweglichen Schiebefensterscheibe 2 nicht möglich. Hierzu ist der Betätigungsgriff 14 mehrteilig ausgebildet und weist ein drehbares Griffelement 14' und eine Führungsscheibe 14" auf, an der die Führungsbahnen 10a und 10b ausgebildet sind. Zueinander korrespondierende Sperrglieder an dem drehbaren Griffelement 14' und einem im Verhältnis zum Betätigungsgriff 14 bei dessen Drehung feststehenden Bauteil stehen in Sperrstellung in Eingriff miteinander und verhindern bei einem in Sperrstellung befindlichen Griffelements 14 dessen wirksame Betätigung. In dem in den Figuren gezeigten Ausführungsbeispiel sind die Sperrglieder beispielhaft von einem drehfest am Griffelement 14' vorgesehenen Sperrfortsatz 18' und einer Sperrnut 18" gebildet, die hier beispielhaft an einer Lagerhülse 19 vorgesehen ist, an der wiederum das Griffelement 14' gelagert und gehalten ist.

In der Betätigungsstellung (Figuren 6a und 6b) kann die Betätigung des Betätigungselements 3 mittels des Betätigungsgriffs 14 hingegen wirksam vorgenommen werden. Der Betätigungsgriff 14 wurde auf die Schiebefensterschiebe 2 zubewegt (Drücken in Richtung der Schiebefensterbaugruppe). Durch das Drücken des Griffelements 14' auf die Schiebefensterscheibe zu sind die Sperrglieder 18', 18" außer Eingriff geraten und das Griffelement kann unter Mitnahme der Führungsscheibe 14", an der die Führungsbahnen 11a, 11b ausgebildet sind, betätigt werden bzw. in die Entriegelungsstellung gedreht werden, wobei sich der Sperrfortsatz 18" in einer sich in Umfangsrichtung in der Lagerhülse 19 erstreckenden Längsnut 20 bewegen kann.

Alternativ zu der in den Figuren gezeigten Ausführung kann auch vorgesehen werden, dass das Griffelement von der Schiebefensterscheibe entfernt werden muss (Ziehen des Betätigungsgriffs in Richtung des Fahrzeuginneren), um die Betätigungssicherung aufzuheben. Die Betätigungssicherung kann ferner auch darin bestehen, dass die Bewegung des Griffelements 14', die erforderlich ist, um die Verriegelungsstangen 4a, 4b aus einer Verriegelungsstellung in eine Entriegelungsstellung zu überführen, in der Sperrstellung geblockt ist, oder sie kann darin bestehen, dass der Betätigungsgriff 14 in der Sperrstellung wirkungslos ins Leere dreht und erst eine der Drehbewegung vorgelagerte Drück- oder Zugbewegung des Griffelements die Mitnahme der Führungsscheibe gewährleistet.

### Bezugszeichenliste

- 1: Verriegelungsvorrichtung
- 2: Schiebefenster
- 3: Betätigungselement
- 4a, 4b: obere/untere Verriegelungsstange
- 5a, 5b: oberer/unterer Führungszylinder (Führung)
- 6a: oberer, unterer Gleitkolben
- 7a, 7b: oberer, unterer Verzahnungsabschnitt (Eingriffsabschnitt)
- 8a-8e: Eingriffselemente
- 9: Torsionsfeder
- 10a, 10b: oberer, unterer Führungspin
- 11a, 11b: obere, untere Führungsbahn
- 12a: erste Anschlagposition
- 12b: zweite Anschlagposition
- 13: stationäre Struktur (feststehende Scheibe)
- 14: Betätigungsgriff
- 14' / 14": drehbares Griffelement / Führungsscheibe
- 15a, 15b: Aussparung in oberer, unterer Führung
- 16a, 16b: Anschlagfläche in oberer, unterer Führung
- 17: Rückhaltefeder
- 18'/18": Sperrfortsatz/Sperrnut (Sperrglieder)
- 19: Lagerhülse
- 20: Längsnut

## Patentansprüche

1. Verriegelungsvorrichtung (1) für ein Schiebefenster (2) eines Kraftfahrzeugs, umfassend mindestens ein Betätigungselement (3), das aus einer Verriegelungsstellung in eine Entriegelungsstellung überführbar ist, wobei das Betätigungselement (3) mit einem in Verschieberichtung des Schiebefensters (2) in einer stationär festgelegten Führung (5a) längsbeweglich sowie zumindest begrenzt drehbeweglich und/oder quer zur Verschieberichtung zumindest begrenzt querbeweglich aufgenommenen Gleitkolben (6a) zusammenwirkt, wobei die Führung (5a) einen Eingriffsabschnitt (7a) aufweist, und wobei der Gleitkolben (6a) mindestens ein Eingriffselement (8a-8e) aufweist, das dazu vorgesehen ist, in der Verriegelungsstellung des Betätigungselements (3) in den jeweiligen Eingriffsabschnitt (7a) einzugreifen, um die Längsbeweglichkeit des Gleitkolbens (6a) zu sperren, und in der Entriegelungsstellung außer Eingriff mit dem Eingriffsabschnitt (7a) gerät, um ein Verschieben des Schiebefensters (2) in Verschieberichtung zu ermöglichen.

2. Verriegelungsvorrichtung (1) nach dem vorhergehenden Anspruch, **dadurch gekennzeichnet, dass** das Betätigungselement (3) um eine Drehachse drehbar gelagert ist.

3. Verriegelungsvorrichtung (1) nach dem vorhergehenden Anspruch, **dadurch gekennzeichnet, dass** eine oder mehrere Verriegelungsstangen (4a, 4b) mit dem Betätigungselement (3) derart zusammenwirken, dass eine Drehung des Betätigungselements (3) eine translatorische Verschiebung der Verriegelungsstangen (4a, 4b) bewirkt.

4. Verriegelungsvorrichtung (1) nach einem der vorhergehenden Ansprüche, **dadurch gekennzeichnet, dass** der Gleitkolben (6a) zumindest begrenzt drehbeweglich in der Führung (5a) aufgenommen ist und eine translatorische Verschiebung der Verbindungsstange (4a) eine Drehung des Gleitkolbens (6a) bewirkt.

5. Verriegelungsvorrichtung (1) nach einem der vorhergehenden Ansprüche, **dadurch gekennzeichnet, dass** der Gleitkolben (6a) derart querbeweglich in der Führung (5a) aufgenommen ist, dass bei einer Verlagerung des Gleitkolbens (6a) innerhalb der Führung (5a) senkrecht zur Verschieberichtung das Schiebefenster (2) senkrecht zur Verschieberichtung gedrängt wird.

6. Verriegelungsvorrichtung (1) nach einem der vorhergehenden Ansprüche, **dadurch gekennzeichnet, dass** eine Torsionsfeder (9) dazu vorgesehen ist, das mindestens eine Betätigungselement (3) in die Verriegelungsstellung zu drängen.

7. Verriegelungsvorrichtung (1) nach einem der vorhergehenden Ansprüche, **dadurch gekennzeichnet, dass** die mindestens eine Verriegelungsstange (4a) einen Führungspin (10a) aufweist, der in mindestens einer Führungsbahn (11a) an dem mindestens einen Betätigungselement (3) geführt ist, wobei die mindestens eine Führungsbahn (11a) eine erste Anschlagposition (12a) und eine zweite Anschlagposition (12b) für den Führungspin (10a) aufweist.

8. Verriegelungsvorrichtung (1) nach Anspruch 3, **dadurch gekennzeichnet, dass** die mindestens eine Führungsbahn (11a) bogenförmig ausgebildet ist, wobei die erste Anschlagposition (12a) in radialer Richtung weiter von der Drehachse des Betätigungselements (3) entfernt ist als die zweite Anschlagposition (12b).

9. Verriegelungsvorrichtung (1) nach einem der vorhergehenden Ansprüche, **dadurch gekennzeichnet, dass** das Verdrehen des Betätigungselements (3) das Schiebefenster (2) senkrecht zur Verschieberichtung des Schiebefensters (2) bewegt.

10. Verriegelungsvorrichtung (1) nach einem der vorhergehenden Ansprüche, **dadurch gekennzeichnet, dass** der Eingriffsabschnitt (7a) sich durchgängig über den gesamten Verschiebeweg des Gleitkolbens (6a) erstreckt.

11. Verriegelungsvorrichtung (1) nach einem der vorhergehenden Ansprüche, **dadurch gekennzeichnet, dass** der Eingriffsabschnitt (7a) als ein eine Verzahnung aufweisender Verzahnungsabschnitt ausgebildet ist.

12. Verriegelungsvorrichtung (1) nach einem der vorhergehenden Ansprüche, **dadurch gekennzeichnet, dass** parallel zum Eingriffsabschnitt (7a) eine Aussparung (15a) in der Führung (5a) vorgesehen ist, die das wenigstens eine Eingriffselement (8a-8e) verschieblich aufnimmt, wenn sich das Betätigungselement (3) in der Entriegelungsstellung befindet.

13. Verriegelungsvorrichtung (1) nach einem der vorhergehenden Ansprüche, **dadurch gekennzeichnet, dass** an dem mindestens einen Betätigungselement (3) eine erste und eine zweite Verriegelungsstange (4a, 4b) angeordnet sind, wobei die erste Verriegelungsstange (4a) mit einem ersten Gleitkolben (6a), der in einer ersten Führung (5a) angeordnet ist, verbunden ist, und wobei die zweite Verriegelungsstange (4b) mit einem zweiten Gleitkolben (6b), der in einer zweiten Führung (5b) angeordnet ist, verbunden ist.

14. Verriegelungsvorrichtung (1) nach einem der vorhergehenden Ansprüche, **dadurch gekennzeichnet, dass** das Betätigungselement (3) eine Betätigungssicherung aufweist.

15. Schiebefensterbaugruppe für den Einsatz in eine Fensteröffnung einer Kraftfahrzeugkarosserie, umfassend eine feststehende Scheibe (13) und ein dieser gegenüber bewegliches Schiebefenster (2), wobei die Schiebefensterbaugruppe eine Verriegelungsvorrichtung nach einem der vorhergehenden Ansprüche aufweist.
